# EUROPEAN PATENT APPLICATION

(11) **EP 4 478 043 A1**
(43) Date of publication of application: **18.12.2024**
(21) Application number: 23179311.8
(22) Date of filing: 14.06.2023
(51) Int. Cl.: G01N 30/60, B01D 15/22

(54) **HIGH PERFORMANCE LIQUID CHROMATOGRAPHY COLUMN HARDWARE**

(71) Applicant: G&T Septech AS, 1424 Ski (NO)
(72) Inventor: TRONES, Roger, N-1408 Kråkstad (NO); TRONES, Raymond, K., N-1425 Ski (NO); LØVLI, Trond, N-1832 Askim (NO)
(74) Representative: Onsagers AS

(57) **Abstract**

A hardware connector system is provided for connecting a tubing 4 to a threaded end fitting 8 in a High Performance Liquid Chromatography (HPLC) device. The connector system comprises: a conical ferrule 3, a threaded nut 2, and a threaded pre-swaging tool 5 for interacting with the threaded nut 2. In a pre-swaging step a wide end 12 of the conical ferrule 3 is gripped and pushed towards a pre-machined recessed groove 1 machined on the outer side of the tubing 4, so that the narrow end 11 of the ferrule 3 is deformed to engage with the groove 1. The ferrule 3 can hence be "locked in place" in the recessed groove 1 without excessive radial forces applied on the tubing 4. When the pre-swaging tool 5 is removed then the threaded end fitting 8 can be coupled to the threaded nut 2, or to another threaded nut 2. The threaded end fitting 8 has a receiving shape for receiving the conical ferrule 3. The system is configured so that the wide end 12 of the conical ferrule 3 is pushed with axial force by the threaded nut 2, urging the narrow end 11 of the "locked in place" ferrule 3 towards the threaded end fitting 8. This results in an axial force between a distal end 13 of the tubing 4 and a sealing surface 9 of the end fitting 8, hence providing a sealed leak tight barrier without excessive radial forces applied on the tubing 4.

## Description

### FIELD OF THE DISCLOSURE

The present disclosure relates to hardware for a High Performance Liquid Chromatography (HPLC) column. More precisely it relates to a method and a connection apparatus for connecting tubing of a HPLC column.

### BACKGROUND

High Pressure Performance Liquid Chromatography, or equivalently High Performance Liquid Chromatography, (both abbreviated to HPLC) is a technique used in chemistry to separate, identify, and quantify the components of a mixture. A solvent liquid is used to carry a small quantity of the mixture through a column that is filled with or lined with an adsorbent material. The different components of the mixture interact differently with the adsorbent material. This leads to separation of the components due to different flow rates through the column. By sampling the liquid flowing out of the column at different times it is possible to identify and quantify the components of the mixture. There are challenges in the HPLC industry due to the small size columns needed and because of the effects that the column material and internal surface properties may have on the HPLC process.

It is well known in the HPLC industry that metal or PEEK shielded Glass Lined Tubing (GLT) is a superior material for use as hardware for packing small dimension columns with internal diameter (ID) 0.050 - 1.0 mm. For 0.5 mm ID and for 1.0 mm ID there are commercially available threaded hardware, such as products using steel tubing. For 0.3 mm and smaller ID's there are no commercial threaded alternative.

For packing small dimension HPLC columns with ID in the range of 0.050 mm - 1.0 mm; typical 0.3 mm, 0.5 mm and 1.0 mm, glass lined tubing (GLT) has been an industrial standard for decades. GLT products are currently marketed under the brand SGE by Trajan Scientific and Medical of Australia (owned by Trajan Scientific Australia Pty Ltd).

So far, no other material / material construction/combination has been able to provide the same high quality smooth surface inside small dimension column hardware as is the case with the GLT surface. The smooth surface is a critical parameter for obtaining highly densely packed small dimension HPLC columns with high efficiency. However, as discussed below there are problems with connection of GLT columns due to the risk of damage to the glass lining.

There are other alternatives:
**PEEKSil** is very much based upon the same construction as the GLT, and the maximum pressure tolerance can be 15,000 psi (about 103 MPa), however because of the "soft" outer surface (PEEK) it is difficult to find a nut/ferrule system that keeps the tube seated in the end fitting without either creating a dead volume or damaging the glass lining layer leading to failure under pressure.
**Polyimide coated fused silica tubing** are quartz tubes coated with polyimide (for protection). The quartz tube under the Polyimide coating is extremely fragile once there is a cut in the surface coating. Likewise, there is, to our knowledge, not an inexpensive commercially available fitting (nut and ferrule) that can be used for packing HPLC particles in this format.
**PEEK lined steel column hardware** is a quite popular threaded hardware, but the surface offered by PEEK is not as smooth as the glass lining. It is still widely used because it is considered to be bioinert.

Over the years several attempts have been made to come up with alternative materials because the glass lining tends to break when used in an end fitting based upon the compression principle. Typically, those types of fittings are based upon a cone/ferrule that collapses and "bites" into the surface of the metal or PEEK tubing that is surrounding the glass lining; consequentially the glass lining is crushed if the cone/ferrule is tightened too much. It requires a highly skilled technician to tighten the connector "just enough" so that the end fitting is mounted tight enough without crushing the glass whilst at the same time giving a seal able to withstand high enough pressures for HPLC use. A major problem is the difference in tolerance offered by the manufacture of the end fitting (especially the ferrule/cone) and the outer diameter (OD) of the GLT. If these two tolerances are not in coherence with each other, then it is difficult to mount the GLT in the end fitting without the risk of breaking the glass.

One possible solution is to switch from compression fittings to threaded fittings, and SGE/Trajan offer a commercial product for 0.5 mm and 1.0 mm GLT. It is a complete product with column tubes in specific lengths, end fittings and filters.

However, they cannot offer this solution for less than 0.5 mm ID GLT. Globally 0.3 mm is the most popular ID small dimension HPLC column, much more so than the 0.5 mm ID column. The reason is that it is not possible to create a 0.3 mm glass lining inside a steel tube that has a large enough OD so that the threaded connection principle can be employed. SGE/Trajan can offer a 0.3 mm ID GLT tube with a 1/8" OD steel housing but that OD is still not large enough to offer threads that can held higher pressures without compromising the core of the tube. This hardware consists of a standard 0.3 mm ID GLT with a 1/16" OD steel housing, then a steel tube with 1/16" ID and 1/8" OD is drawn outside and finally welded in place in both ends.

### SUMMARY

The present disclosure is directed towards handling the challenges of connecting HPLC hardware by means of methods, apparatuses and products as defined in the attached claims and as discussed below. Advantages arise for a connection system that can effectively couple small diameter GLT tubing with less reliance on the skill of the technician. Such a system would also have advantages for other types of tubing use for HPLC, including larger diameter steel tubes. The present disclosure provides a solution to reduce the risk of breaking the GLT for small dimension columns, such as those with an ID of 0.050 - 1 mm. It also provides a cost-effective solution for steel tubing such as tubing with an ID of 1.5 - 25 mm.

Viewed from a first aspect, the invention provides a method of connecting hardware for a high performance liquid chromatography column, wherein the hardware comprises a tubing to be connected to a threaded end fitting, the method comprising:
providing a distal end of the tubing with a recessed groove;
locating a tapered ferrule on the tubing close to the recessed groove with a narrow end of the tapered ferrule at the distal end thereof;
inserting the distal end of the tubing into a threaded pre-swaging tool;
positioning a shoulder of a first threaded nut against a wide end of the tapered ferrule in order to push the tapered ferrule toward the pre-swaging tool;
engaging the first threaded nut with the threaded pre-swaging tool and using the resulting threaded connection to perform a pre-swaging operation in which the narrow end of the tapering ferrule is deformed into engagement with the recessed groove;
removing the threaded pre-swaging tool;
inserting the distal end of the tubing into a threaded end fitting having a sealing surface for receiving the distal end of the tubing;
engaging the first threaded nut, or a second threaded nut, with the threaded end fitting in order to apply axial force from said threaded nut to the wide end of the tapered ferrule and thereby press the distal end of the tubing against the sealing surface of the threaded end fitting.

Viewed from a second aspect, the invention provides a hardware connector apparatus for a high performance liquid chromatography column, the apparatus comprising:
a tubing comprising a recessed groove at a distal end thereof;
a first threaded nut and a tapered ferrule for placement on the tubing, wherein the first threaded nut comprises a shoulder for pressing against a wide end of the tapered ferrule in order to apply axial force to the tapered ferrule;
a threaded end fitting for connection to the distal end of the tubing; and
a threaded pre-swaging tool;
wherein the threaded pre-swaging tool is configured to receive the distal end of the tubing along with the tapered ferrule and to engage with a thread of the first threaded nut in order to swage the tapered ferrule on the tubing with a narrow end of the tapered ferrule being deformed to engage with the recessed groove;
wherein the threaded end fitting is configured to receive the distal end of the tubing with the swaged ferrule, after removal of the threaded pre-swaging tool; and
wherein the thread of the threaded end fitting is configured to engage with the first threaded nut, or a second threaded nut, in order to apply axial force to the wide end of the tapered ferrule and thereby press the distal end of the tubing against a sealing surface of the threaded end fitting.

It will be appreciated that the method of the first aspect may use the apparatus of the second aspect, and that the apparatus of the second aspect can be configured to perform the method of the first aspect. Further optional features and other aspects of the invention are discussed below, and these may be used in combination with either the first or the second aspect set out above.

The present concept may be defined as a hybrid end fitting because the compression principle is only used to lock the ferrule into a premade recessed groove in the surface of the tubing using the pre-swaging tool. Then the tube with the pre-swaged ferrule and a threaded nut is assembled with an end fitting. This may be done with a filter/screen followed by a washer, or with a washer having an integrated filter/screen, and advantageously these are used in a standard threaded end fitting where it is possible to then connect any commercial tubing geometry on the market.

The hybrid concept allows for a leak tight connection to be formed for tubing such as GLT or metal tubing (e.g. steel) in a HPLC device, with a reduced risk of damage to the tubing and with advantages in the ease of assembly. It is no longer required to have a highly skilled technician to be sure of avoiding fracture of GLT as the proposed concept avoids a need to put any significant radial load onto the tubing. Instead, the required seal is formed by axial forces at the distal end of the tubing where it presses against the internal surface of the end fitting, preferably with a suitable washer to ensure good sealing performance.

The tubing may be provided with a flat end at the distal end. Thus, the method may include a step of machining away any ridges or unevenness at the distal end. The apparatus may make use of a flat ended tubing formed by such a step. Since the seal is formed by axial force at the distal end then providing a flat end enhances the sealing performance allowing use at higher pressures. Additionally, or alternatively, the method may include removing an outer circumferential edge of the distal end, e.g. by forming a bevel about the outer circumferential edge.

The tubing may advantageously be GLT, such as GLT with ID less than 2mm, or less than 1 mm. In some examples the tubing is GLT with ID in the range 0.050 - 1 mm. Alternatively, the tubing may be steel tubing of larger dimensions, such as steel tubing with ID larger than 1 mm or larger than 1.5 mm. In some examples the tubing is steel tubing with an ID in the range 1.5 - 25 mm. The steel may be stainless steel.

The tapered ferrule may be a conical ferrule, such as a conical shape with a uniformly tapering surface. The tapered ferrule may comprise stainless steel. The ferrule is located on the tubing with its narrow end closest to the distal end of the tubing and its wide end further from the distal end of the tubing.

The threaded nut and/or the threaded end fitting may be formed of stainless steel. The pre-swaging tool may be stainless steel. Advantageously the end fitting may be of a known design permitting onward connection to other known components for a HPLC device, such as for sampling/analysis of the liquid flowing out of the tubing.

Advantageously a washer is provided at the connection between the distal end of the tubing and the internal surface of the end fitting. This washer may for example be a PEEK washer. There may also be a filter/screen provided at the end fitting for filtering fluid passing out of the tubing. The washer and the filter/screen may be provided in a single part, e.g. a washer with an integral filter/screen. In other examples the filter/screen is provided as a separate part, which may be located between the washer and the internal surface of the end fitting. The filter/screen may be a polymeric filter/screen of a type known for use with HPLC columns.

The washer assists in providing a seal at the surface where the distal end of the tubing contacts the end fitting. It may thus alternatively be described as a seal. With the use of a bevel at the distal end, as discussed above, then when a washer is present a superior seal can be formed by compression of the washer at the distal end with the washer material at the outer circumferential edge pressed against the bevel. In that case the washer outer diameter should be larger than the inner diameter of the bevel, and preferably the washer outer diameter is the same as the tubing outer diameter. In the case of a GLT then the inner diameter of the washer is advantageously less than the outer diameter of the glass lining of the tubing. This avoids the risk of forces being placed on the glass lining during the connection process, which reduces risk of damage to the glass.

The recessed groove is formed near to the distal end of the tubing. The distance between the distal end and the recessed groove should be sufficient to avoid risk of damage/deformation to the distal end during pre-swaging or assembly, as well as to ensure that the seal is formed at the distal end and not by the ferrule. It should however not be too large as this will require a threaded nut of impractical size. In some examples the distance between the distal end and the recessed groove may be a length of less than 5 times the outer diameter of the tubing and/or may be at least 0.3 times the outer diameter. Typical implementations may have a distance equivalent to 0.5 to 3 times the outer diameter of the tubing, for example the groove may be located at a distance of 1 to 2 diameters from the distal end of the tubing.

The recessed groove may have a square form, i.e. with right angle corners when viewed in cross-section. The cross-section of the square groove may be a geometric square (with all sides of equal length) or may be rectangular. Alternatively, the recessed groove may have another shape when viewed in cross-section, such as a trapezium or other quadrilateral with one or more angled sides, or it may be a shape with curved sides, or the groove may be a triangle in cross-section. A triangular shape in cross-section can provide the recessed groove with a conical shape, i.e. forming a frustum of a cone with its narrow end toward the distal end of the tubing.

The recessed groove may have a maximum depth of 0.1 - 1 mm and/or a width of 0.8 - 3 mm. The maximum depth should be limited with respect to the available depth of material of the tubing, and should not for example exceed 75% of the depth of the tubing structure, or of the outer structure when the tubing is GLT. Thus, the recessed groove may have a depth of up to 75% of the depth of the outer layer of GLT. The width may be similar to the depth and/or may be larger than the depth. The recessed groove advantageously fully encircles the tubing and it may have a uniform cross-section about the circumference of the tubing. The recessed groove may be formed by removal of material from the outer surface of the tubing, for example by machining such as by means of a CNC lathe or CNC milling machine. The same machining process may be used to form the flat end and/or to remove an outer circumferential edge of the distal end, where those features are present.

The hardware connector apparatus may involve a single threaded nut, i.e. the first threaded nut referenced herein, which is used for the threaded connection to both of the threaded pre-swaging tool and the threaded end fitting. Thus, the thread of the threaded pre-swaging tool and of the threaded end fitting may be the same. On the other hand, as noted above, there may be a second threaded nut that is used for the threaded end fitting. The features above in respect of the second threaded nut may equivalently be defined as connecting the thread of the threaded end fitting to one of the first threaded nut and a second threaded nut. It should be noted that the reference to "first" and "second" is one of mere terminology and may equivalently be described as the use of a threaded nut and (optionally) another threaded nut, or as a pre-swaging nut and an end fitting nut.

The use of a second threaded nut might be a matter of convenience for different phases of assembly, i.e. with two threaded nuts that have identical threaded design. It will however be appreciated that advantages may arise if the second threaded nut is different to the first threaded nut, such as by having a different lead, pitch and/or diameter of the thread, or by variations in other thread characteristics to optimise them for the different requirements of the pre-swaging operation and the connection to the end fitting. In one example the first threaded nut may have a smaller pitch and/or lead than the second threaded nut. In that case the threaded pre-swaging tool would then have a thread of smaller pitch and/or lead than the thread of the threaded end fitting. This allows for finer control during the pre-swaging operation, with the first threaded nut being a dedicated pre-swaging nut that is re-used during later similar steps for further connectors. The second threaded nut can have a coarser thread with larger pitch and/or lead since the action of sealing the distal end in to the threaded end fitting requires less precision. This also means that the second threaded nut and the threaded end fitting may be easier (and less costly) to produce.

The first threaded nut comprises a shoulder for engaging with the wide end of the tapered ferrule. Where a second threaded nut is used then this advantageously comprises a second shoulder for engaging with the wide end of the tapered ferrule in a similar way. The shoulders of the first threaded nut and the second threaded nut may be of the same shape and size, since they interact with the same ferrule. The shoulder may be a similar width to the wide end of the tapered ferrule, e.g. for a conical shaped ferrule there may be a circular ringshaped shoulder with the same outer diameter as the wide end of the ferrule. The wide end of the ferrule and the shoulder of the threaded nut(s) are preferably parallel when in place on the tubing. For example, they may both be flat surfaces that are perpendicular to the long axis of the tubing. The shoulder may be an internal shoulder, such as a shoulder formed within a recess that receives the wide end of the tapered ferrule. The shoulder is used to apply an axial force to the wide end of the tapered ferrule as the threads of the threaded nut and the threaded end fitting are tightened together. This in turn applies axial force to the tubing via the swaged coupling of the tapered ferrule to the tubing, which allows for axial force at the distal end of the tubing where it confronts the sealing surface of the threaded end fitting. It will be appreciated that the axial direction as referenced herein is the direction along the long axis of the tubing.

The threaded nut(s) may comprise an internal thread for engaging with an external thread of the pre-swaging tool and/or of the end fitting. In that case the internal thread may be provided around a recess that also enclose the shoulder, which is hence an internal shoulder. That permits use of pre-existing pre-swaging tools and end fittings, which typically have an external thread. It will however be appreciated that the same function can be achieved with an external thread on the "nut" and an internal thread on the pre-swaging tool and/or the end fitting. This arrangement of the internal and external threads is therefore also within the scope of this disclosure.

The threaded pre-swaging tool is only used temporarily and thus the method may include repeating the pre-swaging and connection operation using a new tubing and ferrule, but with the same threaded pre-swaging tool.

The threaded end fitting has a sealing surface used in the connection to the distal end of the tubing. The distal end of the tubing and the sealing surface of the threaded end fitting are preferably parallel to each other. For example, they may have planar parallel surfaces perpendicular to the long axis of the tube. As noted above, the method can include forming a suitably flat end at the distal end of the tubing and this may form an end surface that will be parallel to the sealing surface of the threaded end fitting. The sealing surface of the threaded end fitting may be an internal surface at the base of a recess of the end fitting. In the case where the end fitting has an external thread then this may be a thread formed on the outside of a cylindrical section that contains the recess and the internal surface. The threaded end fitting also receives the narrow end of the tapered ferrule and thus may have a tapered surface for engagement with the outer surface of the ferrule. In the case of a conical ferrule then the threaded end fitting may have a conical surface of complementary shape. Thus, the recess of the threaded end fitting may have a conical surface at its opening, leading to a circular hole sized to receive the tubing, and then an internal sealing surface at the base of the circular hole.

It will be appreciated that the method and apparatus discussed above involve combinations of parts and sub-assemblies that are considered to be novel and inventive in their own right. Thus, viewed from a further aspect the invention provides a kit for forming tubing for a high performance liquid chromatography column, the kit comprising a tubing having a recessed groove at a distal end and a tapered ferrule for forming a swaged engagement with the tubing at the recessed groove. In yet another aspect the invention provides a sub-assembly of a high performance liquid chromatography tubing, the sub-assembly being formed from the kit of the above aspect by use of a threaded pre-swaging tool to deform a narrow end of the tapered ferrule into swaged engagement with the recessed groove.

The tubing and/or tapered ferrule of the above aspects may have further features as discussed above for the tubing and/or tapered ferrule of the first and second aspects. The kit may additionally include the first threaded nut and/or the end fitting as well as optionally the second threaded nut and/or other advantageous further parts such as the washer and/or the filter/screen. The pre-swaging tool use to form the sub-assembly may have features as discussed above, and the sub-assembly may be formed via the method of the first aspect or optional variations thereof.

The invention further extends to a high performance liquid chromatography apparatus comprising the sub-assembly of the above aspect along with a threaded nut and a threaded end fitting, wherein the threaded nut is engaged with the thread of the threaded end fitting in order to apply axial force to a wide end of the tapered ferrule and thereby to form a seal between the distal end of the tubing and a sealing surface of the threaded end fitting. The threaded nut in this case may be the first threaded nut or the second threaded nut as discussed above.

Certain illustrative embodiments of the present invention will now be described by way of example only and with reference to the accompanying drawings, which are listed below.

### BRIEF DESCRIPTION OF THE FIGURES

**FIGURES 1A and 1B****:** Illustrate an exploded view and a pre-assembly view of male connector parts for an HPLC column, the parts comprising: a tubing with a recessed groove, a conical ferrule, and a threaded nut.
**FIGURE 2****:** Illustrates the pre-assembly of the male connector parts along with a pre-swaging tool.
**FIGURE 3****:** Illustrates a perspective view of the parts shown in Figure 2.
**FIGURES 4A and 4B****:** Illustrate a side view and a cross-section view of a sub-assembly including the assembled male connector parts after use of the pre-swaging tool to deform the conical ferrule.
**FIGURE 5****:** Illustrates the assembled male connector parts along with a washer, a filter/screen, and an end fitting including the female connection.
**FIGURE 6****:** Illustrates a perspective view of the same parts shown in Figure 5.
**FIGURES 7A to 7C****:** Illustrates a cross-section, a side view, and an enlarged/detail view of an assembled tubing for an HPLC column with the female connection of the end fitting connected to the assembled male connector parts.
**FIGURES 8A and 8B****:** Illustrate a cross-section and a side view of a metal/PEEK glass line tubing (GLT) with a conical recessed groove.
**FIGURES 9A and 9B****:** Illustrate a cross-section and a side view of a metal/PEEK glass line tubing (GLT) with a square recessed groove.
**FIGURES 10A and 10B****:** Illustrate a cross-section and a side view of a steel tubing with a conical recessed groove.
**FIGURES 11A and 11B****:** Illustrate a cross-section and a side view of a steel tubing with a square recessed groove.

### DETAILED DESCRIPTION

This disclosure solves the problem of breaking the glass lined tubing (GLT) for small dimension columns with an ID of 0.050 - 1 mm and also provides a simple and cost-effective method for steel tubing with an ID of 1.5 - 25 mm. It may also be adapted for other tubing sizes or material types. The proposed concept may use a method and apparatus as set out below and as shown by way of example in the Figures.

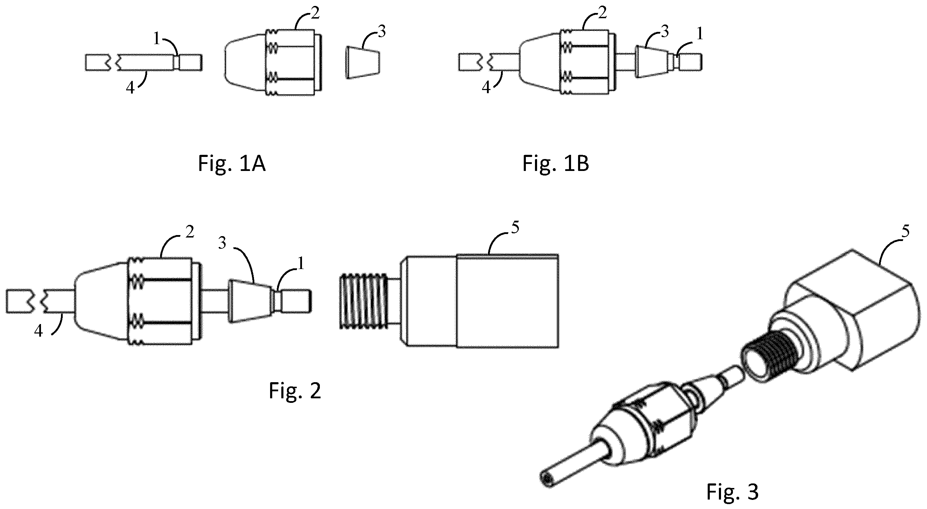

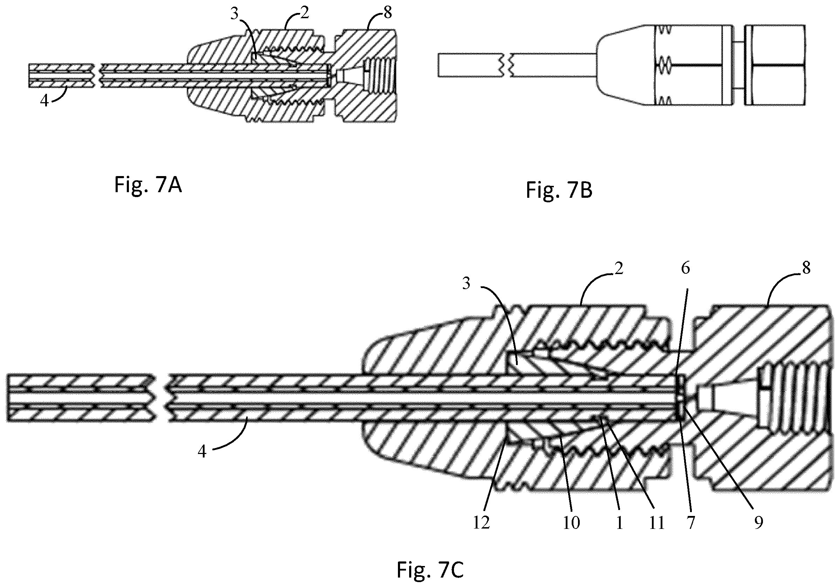

Figures 1A and 1B show a pre-assembly of male connector parts for connection of a HPLC column. These parts include a tubing 4, a conical ferrule 3, and a threaded nut 2. They are shown in exploded view in Figure 1A, and in a pre-assembly configuration in Figure 1B. The ferrule 3 is advantageously a conical shape having uniform tapering. It may comprise or consist of stainless steel. The combination of parts of Figure 1B is referred to as a pre-assembly configuration since the ferrule 3 is not yet swaged to the tubing 4. The proposed method includes a pre-swaging step where the ferrule 3 is joined to the tubing 4 in order to form a sub-assembly that is later used for the final connection to an end fitting 8. This pre-swaging step involves the use of a recessed groove 1 that is formed in the outer surface of the tubing 4, e.g. via machining. The recessed groove 1 may for example be 0.1 - 1 mm deep and/or 0.8 - 3 mm in width. The depth should be no more than 75% of the available material depth of the tubing 4, which may be the material depth of the outer layer of GLT. The recessed groove 1 may be a square groove or some other suitable shape including a conic form as described below. As well as having a groove 1 the tubing 4 is also adapted by removing any edge/ridge from the end 13 of the tubing 4 in order to provide a flat end 13 with a bevel (more clearly seen in Figures 7C to 11B). The flat end 13 allows for an improved pressure rating for the seal. The bevel enhances the seal by allowing the flat end 13 to press into a washer 6 of the seal as it compresses the washer 6.

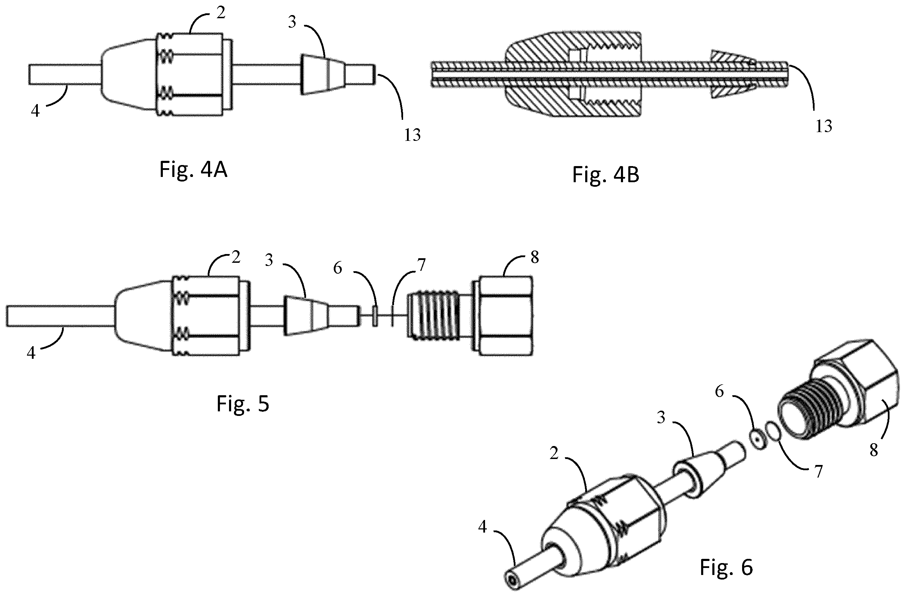

A dedicated pre-swaging tool 5 is provided as shown in Figures 2 and 3 and this tool is used to couple the conical ferrule 3 to the tubing 4. In the pre-assembly of Figure 1B the ferrule 3 is placed on the tubing 4 having its tip (narrow end 11) adjacent to the recessed groove 1. The threaded nut 3 is then screwed together with the pre- swaging tool 5 to draw the ferrule 3 into a suitably shaped chamber within the pre- swaging tool 5. This compresses the tip of the conical ferrule 3 so that it deforms to fill the recessed groove 1. The pre-swaging tool 5 is then removed with the ferrule 3 securely fitted on the tubing 4. This provides a sub-assembly of male connector parts as shown in Figures 4A and 4B. Notably, the swaging step is only required to provide enough compression to connect the narrow end 11 of the ferrule 3 to the tubing 4 at the recess 1. There is no need to apply any significant compression force to the tubing 4 itself. This avoids radial forces that could deform a metal tube or crack the glass lining of a GLT.

To complete the connection for the HPLC hardware the sub-assembly of the pre-swaged tubing 4 with the "locked in place" ferrule 3 will then be placed in a threaded end fitting 8 as seen in Figures 5 and 6. In this example the threaded end fitting 8 has a female connection for receiving the assembled male connector parts as shown in Figures 7A to 7C. The final assembly also includes a filter/screen 7, such as a polymeric lined filter/screen 7, and a suitable washer 6. This may for example be a PEEK washer 6. The washer 6 and the filter 7 are located between the flat end of the tubing 4 and a flat bottom portion 9 of the end fitting 8, as best seen in Figure 7C. In an alternative to the configuration shown in the drawings the filter/screen 7 may be integrated with the washer 6, so that the sealing and filtering functions are provided by a single part.

When the threaded nut 2 is tightened onto the thread of the end fitting 8 then a leak tight connection is formed between the flat end 13 of the tubing 4 and the flat bottom part 9 of the end fitting 8. The threaded end fitting 8, or similar connector parts, could also in some variations be provided as an integral part of an injection port. It will be appreciated that the principle described herein applies to any threaded connector at the end of the tubing 4, so that the threaded end fitting 8 can be a threaded part of any suitable apparatus and is not limited to only a separate end part as shown in the Figures.

In this example the threaded end fitting 8 connects to the same threaded nut 2 as was used for the pre-swaging step. However, another threaded nut 2 may be used. This second threaded nut 2 may have a different form of thread, such as by having a different pitch and/or lead. Where there are two threaded nuts with differences in the threads then the threaded pre-swaging tool 5 and the threaded end fitting 8 will have similar differences in their threads.

This connection apparatus uses axial movement of the threaded nut 2 against the base of the wide end 12 of the conical ferrule 3 to push the distal end 13 of the tubing 4 into the female connection in the end fitting 8. Ultimately the tightening of the threaded parts creates an axial force with the flat end 13 of the tubing 4 pressing against the washer 6 in the bottom portion 9 of the end fitting 8. A leak tight seal is thereby formed. The axial transfer of force is enabled by the swaged connection of the narrow end 11 of the ferrule 3 to the tubing 4 via the groove 1. The male part of the connection system includes the ferrule 3 and this is seated within a conical recess 10 of the end fitting 8, but there is no significant radial force on the ferrule 3. The ferrule 3 is not used to create the pressure seal for the connection, which instead is provided by axial force at the flat distal end 13 of the tube 4. This contrasts with the industrial standard usage of compression fittings, where the leak-tight connection appears between the male conical shape of the ferrule and the female shaped cone in the compression fitting.

It will be appreciated that significant benefits arise from the hybrid design of the proposed connection system with its use of compression principles for the pre-assembly and pre-swaging step, then a switch to axial forces in the final assembly. This permits threaded connectors to be used for even very small diameters of tubing, so that the problems with breakages of small diameter GLT are avoided. It also provides a simple and cost-efficient connection system that provides high sealing performance for larger sized tubing and differing materials. It has been found that the resulting seal can be made leak tight with internal pressures in the range 10 000 - 20 000 psi (about 68.9 - 137.9 MPa) and the connection system may be a part of a HPLC column that operates at such pressures.

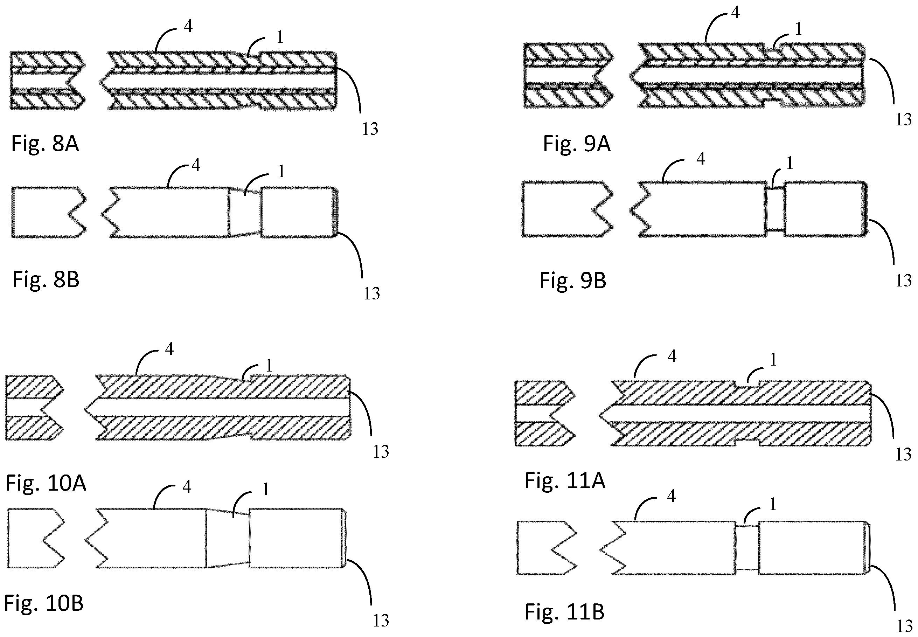

In Figures 8A to 11B various different implementations are shown using either GLT (e.g. glass-lined metal tubing or PEEK tubing) or tubing of solid material (e.g. stainless steel). The drawings are not to scale, and it will be appreciated that the method/apparatus discussed above may be used with a wide range of tubing for HPLC systems, with various diameters. Figures 8A and 8B show a cross-section and a side view of a metal/PEEK glass line tubing (GLT) 4 with a conical recessed groove 1. This groove may have a maximum depth of 0.1 - 1 mm and a width of 0.8 - 3 mm. The maximum depth advantageously does not exceed 75% of the available material depth, e.g. the depth of the outer layer for a GLT. The groove 1 may form a frustoconical shape with its depth reducing linearly across its width, as shown in the Figures. Figures 9A and 9B show a cross-section and a side view of a similar GLT 4 with a square recessed groove 1. This square groove may have a uniform depth of 0.1 - 1 mm and a width of 0.8 - 3 mm and it is "square" in form by virtue of a cross-section with right angle corners, e.g. as with a square wave. The depth advantageously does not exceed 75% of the available material depth, e.g. the depth of the outer layer for a GLT. The cross-section could be a geometric square, i.e. with identical depth and width, or it may be rectangular. Figures 10A to 11B show various examples of a steel tubing 4 having, respectively, a conical recessed groove 1 and a square recessed groove 1. The dimensions of these grooves 1 can be similar to those discussed above.

Other groove shapes are also possible, such as modification to the frustoconical groove 1 where a non-linear/curved profile replaces the linear form in the Figures, or a modification to the square recessed groove 1 to replace one or both of the radially aligned edges with a slanted edge. The shape of the ferrule 3 may also vary compared to the uniformly tapering conical shape depicted in the drawings. For example, it may have a non-uniform taper or some other variation from a conical shape.

In further variations, the proposals above may be implemented as a connection system for tubing of differing materials such as those discussed above: PEEKSil, polyimide coated fused silica tubing, or PEEK lined steel column hardware.

**Reference numbers**

| | |
|---|---|
| 1 | Pre-machined recessed groove |
| 2 | Threaded nut |
| 3 | Conical ferrule |
| 4 | HPLC column |
| 5 | Pre-swaging tool |
| 6 | Washer |
| 7 | Filter/screen |
| 8 | End fitting |
| 9 | Flat bottom part |
| 10 | Receiving shape of end fitting |
| 11 | Narrow end of conical ferrule |
| 12 | Wide end of conical ferrule |

## Claims

1. A method of connecting hardware for a high performance liquid chromatography column, wherein the hardware comprises a tubing to be connected to a threaded end fitting, the method comprising:
providing a distal end of the tubing with a recessed groove;
locating a tapered ferrule on the tubing close to the recessed groove with a narrow end of the tapered ferrule at the distal end thereof;
inserting the distal end of the tubing into a threaded pre-swaging tool;
positioning a shoulder of a first threaded nut against a wide end of the tapered ferrule in order to push the tapered ferrule toward the pre-swaging tool;
engaging the first threaded nut with the threaded pre-swaging tool and using the resulting threaded connection to perform a pre-swaging operation in which the narrow end of the tapering ferrule is deformed into engagement with the recessed groove;
removing the threaded pre-swaging tool;
inserting the distal end of the tubing into a threaded end fitting having a sealing surface for receiving the distal end of the tubing;
engaging the first threaded nut, or a second threaded nut, with the threaded end fitting in order to apply axial force from said threaded nut to the wide end of the tapered ferrule and thereby press the distal end of the tubing against the sealing surface of the threaded end fitting.

2. A method as claimed in claim 1, wherein the method comprises providing the tubing with a flat end at the distal end.

3. A method as claimed in claim 1 or 2, comprising placing a washer and/or a filter/screen between the distal end of the tubing and the sealing surface of the end fitting.

4. A hardware connector apparatus for a high performance liquid chromatography column, the apparatus comprising:
a tubing comprising a recessed groove at a distal end thereof;
a first threaded nut and a tapered ferrule for placement on the tubing, wherein the first threaded nut comprises a shoulder for pressing against a wide end of the tapered ferrule in order to apply axial force to the tapered ferrule;
a threaded end fitting for connection to the distal end of the tubing; and
a threaded pre-swaging tool;
wherein the threaded pre-swaging tool is configured to receive the distal end of the tubing along with the tapered ferrule and to engage with a thread of the first threaded nut in order to swage the tapered ferrule on the tubing with a narrow end of the tapered ferrule being deformed to engage with the recessed groove;
wherein the threaded end fitting is configured to receive the distal end of the tubing with the swaged ferrule, after removal of the threaded pre-swaging tool; and
wherein the thread of the threaded end fitting is configured to engage with the first threaded nut, or a second threaded nut, in order to apply axial force to the wide end of the tapered ferrule and thereby press the distal end of the tubing against a sealing surface of the threaded end fitting.

5. A hardware connector apparatus as claimed in claim 4, wherein the apparatus is configured for use with the method of any of claims 1, 2 or 3.

6. A method or apparatus as in any preceding claim, wherein the tubing is glass lined tubing with internal diameter less than 2mm, optionally with internal diameter in the range 0.050 - 1 mm.

7. A method or apparatus as in any of claims 1 to 5, wherein the tubing is steel tubing of internal diameter larger than 1 mm, optionally with internal diameter in the range 1.5 - 25 mm.

8. A method or apparatus as in any preceding claim, wherein the recessed groove fully encircles the tubing and has a uniform cross-section about the circumference of the tubing.

9. A method or apparatus as in any preceding claim, wherein the recessed groove has a square form in which the cross-section of the groove is square or rectangular.

10. A method or apparatus as in any of claims 1 to 8, wherein the recessed groove has a conical shape.

11. A method or apparatus as in any preceding claim, wherein the recessed groove has a maximum depth of 75% of the available material depth of the tubing and/or a width of 0.8 - 3 mm.

12. A kit for forming tubing for a high performance liquid chromatography column, the kit comprising a tubing having a recessed groove at a distal end and a tapered ferrule for forming a swaged engagement with the tubing at the recessed groove.

13. A kit as claimed in claim 14 wherein the tubing is glass lined tubing with an internal diameter in the range 0.05 to 1 mm.

14. A sub-assembly of a high performance liquid chromatography tubing, the sub-assembly being formed from the kit of claim 12 or 13 by use of a threaded pre-swaging tool to deform a narrow end of the tapered ferrule into swaged engagement with the recessed groove.

15. A high performance liquid chromatography apparatus comprising the sub-assembly of claim 14 along with a threaded nut and a threaded end fitting, wherein the threaded nut is engaged with the thread of the threaded end fitting in order to apply axial force to a wide end of the tapered ferrule and thereby to form a seal between the distal end of the tubing and a sealing surface of the threaded end fitting.
